(19) Europäisches Patentamt / European Patent Office / Office européen des brevets

(11) **EP 3 869 752 B1**

(12) **EUROPEAN PATENT SPECIFICATION**

(45) Date of publication and mention of the grant of the patent:
**14.02.2024 Bulletin 2024/07**

(21) Application number: **21151402.1**

(22) Date of filing: **13.01.2021**

(51) International Patent Classification (IPC):
**H04L 45/12** *(2022.01)*

(52) Cooperative Patent Classification (CPC):
**H04L 45/12**

(54) **DEVICE FOR HANDLING ROUTING PATHS FOR STREAMS IN A TIME-SENSITIVE NETWORKING NETWORK**

VORRICHTUNG UND VERFAHREN ZUR HANDHABUNG VON VERMITTLUNGSWEGEN FÜR STRÖME IN EINEM ZEITSENSITIVEN VERNETZUNGSNETZWERK

DISPOSITIF ET PROCÉDÉ DE GESTION DE TRAJETS DE ROUTAGE POUR DES FLUX DANS UN RÉSEAU SENSIBLE AU TEMPS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.02.2020 US 202062980465 P**

(43) Date of publication of application:
**25.08.2021 Bulletin 2021/34**

(73) Proprietor: **Moxa Inc.**
**New Taipei City 231 (TW)**

(72) Inventors:
• **Chuang, Ching-Chih**
 **New Taipei City 231 (TW)**
• **Lin, Chung-Wei**
 **New Taipei City 231 (TW)**
• **Pang, Ai-Chun**
 **New Taipei City 231 (TW)**
• **Yu, Tzu-Hsien**
 **New Taipei City 231 (TW)**

(74) Representative: **Straus, Alexander**
 **2K Patent- und Rechtsanwälte - München**
 **Keltenring 9**
 **82041 Oberhaching (DE)**

(56) References cited:
**WO-A1-2020/035133**

• **ALNAJIM ABDULLAH ET AL: "Incremental Path-Selection and Scheduling for Time-Sensitive Networks", 2019 IEEE GLOBAL COMMUNICATIONS CONFERENCE (GLOBECOM), IEEE, 9 December 2019 (2019-12-09), pages 1-6, XP033722265, DOI: 10.1109/GLOBECOM38437.2019.9013427 [retrieved on 2020-02-25]**

**Description**

Field of the Invention

The present invention relates to a device for handling routing paths for streams in a time-sensitive networking network.

Background of the Invention

A time-sensitive networking (TSN) protocol is standardized to enable deterministic communication for safety-critical real-time applications in industrial networks. Although various traffic types of streams are supported by a TSN (TSN-enabled) network, how to determine routing paths for the streams for optimizing performance of the TSN network is an ongoing and essential issue. In addition, future industrial automations require the TSN network to be dynamic (e.g., adding streams) and runtime reconfigurations, which makes existing routing methods unfeasible. Thus, a mechanism for determining the routing paths for the streams in the TSN network is an important problem to be solved.

"Incremental Path-Selection and Scheduling for Time-Sensitive Networks", by A. Alnajim et al., presented in GLOBECOM 2019, proposes an incremental QoS-aware path selection algorithm that uses QoS measurement to route TSN flows. Then, multiple incremental scheduling algorithms that address above mentioned issues, and demonstrate their performance are introduced.

However, the above document does not disclose the device and the method recited in the present invention.

Summary of the Invention

The invention is defined by the appended claims.

Brief Description of the Drawings

Fig. 1 is a schematic diagram of a time-sensitive networking (TSN) network according to an example of the present invention.
Fig. 2 is a schematic diagram of a central network controller (CNC) according to an example of the present invention.
Fig. 3 is a schematic diagram of a network topology of a TSN network according to an example of the present invention.
Fig. 4 is a flowchart of a process according to an example of the present invention.
Fig. 5 is a flowchart of a process according to an example of the present invention.

Detailed Description

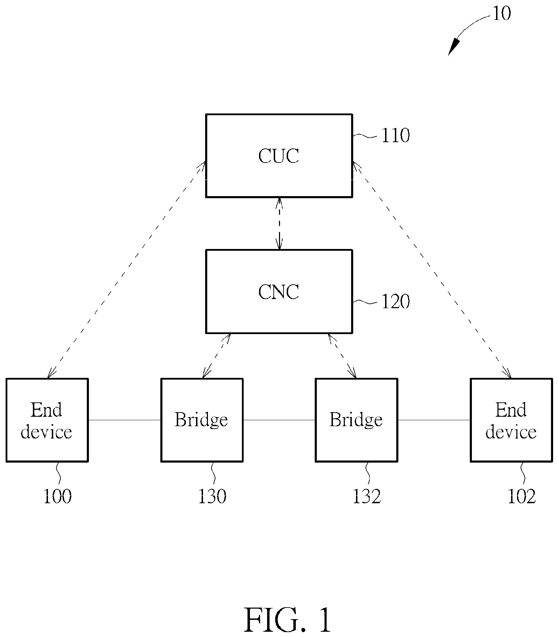

Fig. 1 is a schematic diagram of a time-sensitive networking (TSN) network 10 according to an example of the present invention. The TSN network 10 is briefly composed of two end devices 100 and 102, a centralized user configuration (CUC) 110, a central network controller (CNC) 120 and bridges 130 and 132. The end devices 100 and 102 and the bridges 130 and 132 are connected by physical links. The end devices 100 and 102 may perform (e.g., run) time-aware applications that need deterministic communication.

In Fig. 1, the end devices 100 and 102, the CUC 110, the CNC 120 and the bridges130 and 132 are simply utilized for illustrating the structure of the TSN network 10. Practically, an end device may be a robot, a vision sensor, a machine, a programmable logic controller (PLC), or combination thereof. The end device may perform end-to-end communication with another end device. That is, the end device may be a source node of a stream, and is referred to as a talker. In addition, the end device may be a destination node of a stream, and is referred to as a listener. Note that a source node (or destination node) may communicate with at least one destination node (or at least one source node). A source node of a stream may be a destination node of another stream.

The CUC 110 may communicate with both the CNC 120 and the end devices 100 and 102. The CUC 110 may develop or perform several applications, such as topology discovery and control policy. The CNC 120 may comprise interface(s) (e.g., graphical user interface (GUI)), and communicate with both the CUC 110 and the bridges 130 and 132. The CNC 120 may be a primary center for handling streams, and configure at least one of the bridges 130 and 132. A bridge, also named as an Ethernet switch, may comprise priority queues, receive a time schedule from the CNC 120, identify traffic types of the streams, and switch Ethernet frames of the streams based on a credit-based shaper (CBS) and/or a time-aware shaper (TAS) defined in TSN standards. The TAS controls gates for frame delivery based on a gate control list (GCL).

Traffic of the streams may be classified into three types: TSN, audio video bridging (AVB), and best effort (BE). Accordingly, a stream may be a TSN stream, an AVB stream or a BE stream. In addition, a priority order of the traffic types from high to low may be TSN, AVB, and BE. That is, a frame of the TSN stream preempts a frame of the AVB stream and a frame of the BE stream.

A TSN stream may be defined according to a plurality of parameters, e.g., a source node, a destination node, a size, a period, an offset, and a deadline. That is, a data (e.g., Ethernet frame) with the size is transmitted periodically, and may need to arrive at the destination node before the deadline per transmission.

An AVB stream may be according to a plurality of parameters, e.g., a source node, a destination node, a size, a period, a type (e.g., high priority class-A or low priority class-B), and a deadline. That is, a data with the size and the type is transmitted periodically, and may need to arrive at the destination node before the deadline per transmission.

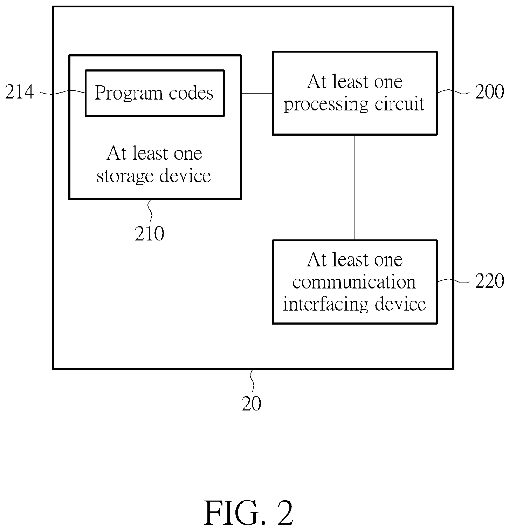

Fig. 2 is a schematic diagram of a CNC 20 according to an example of the present invention. The CNC 20 may be the CNC 120 shown in Fig. 1.The CNC 20 may include at least one processing circuit 200 such as a microprocessor or Application Specific Integrated Circuit (ASIC), at least one storage device 210 and at least one communication interfacing device 220. The at least one storage device 210 may be any data storage device that may store program codes 214, accessed and executed by the at least one processing circuit 200. Examples of the at least one storage device 210 include but are not limited to a subscriber identity module (SIM), read-only memory (ROM), flash memory, random-access memory (RAM), Compact Disc Read-Only Memory (CD-ROM), digital versatile disc-ROM (DVD-ROM), Blu-ray Disc-ROM (BD-ROM), magnetic tape, hard disk, optical data storage device, non-volatile storage device, non-transitory computer-readable medium (e.g., tangible media), etc. The at least one communication interfacing device 220 is preferably at least one transceiver and is used to transmit and receive signals (e.g., data, messages and/or packets) according to processing results of the at least one processing circuit 200.

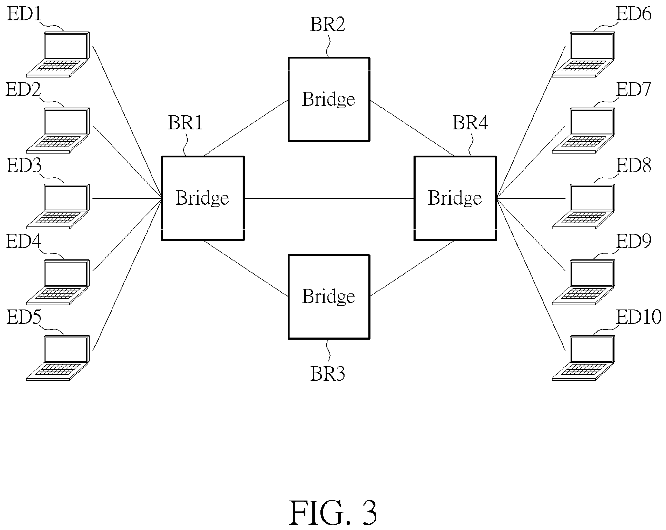

Fig. 3 is a schematic diagram of a network topology of a TSN network according to an example of the present invention. The network topology comprises ten end devices ED 1-ED 10 and four bridges BR1-BR4 connected by physical links. The physical links have corresponding bandwidth capacities, respectively. In addition, the network topology may be modeled as a graph (e.g., directed graph), the end devices ED1-ED10 and the bridges BR1-BR4 may be modeled as vertices of the graph, and the physical links may be modeled as edges of the graph. Note that a number of the end devices, a number of the bridges, and a connection manner are not limited herein.

In Fig, 3, there are three paths from the end device ED1 to the end device ED6, i.e., {ED1, BR1, BR2, BR4, ED6}, {ED1, BR1, BR3, BR4, ED6}, and {ED1, BR1, BR4, ED6}. For example, a stream may be transmitted via the path {ED1, BR1, BR2, BR4, ED6}, when a source node and a destination node of the stream are the end devices ED 1 and ED6, respectively.

An establishment of an end-to-end communication is briefly stated as follows. Before the TSN network is in operation (i.e., the TSN network is offline), a source node of a stream transmits a request with a requirement (e.g., latency requirement, Quality of Service (QoS) requirement) of the stream to a CUC, and the CUC forwards the request to a CNC.

After receiving the request from the CUC, the CNC determines a routing path and a time schedule for the stream that satisfies the requirement, configures bridge(s), and notifies the CUC. Then, the CUC configures the source node according to the notification. Note that the CNC may notify an error to the CUC, if the CNC fails to determine the routing path and the time schedule.

When the TSN network is in operation (i.e., the TSN network is online), the stream is transmitted via the routing path according to the time schedule from the source node to a destination node of the stream.

Note that routing methods in the prior art are based on an offline (e.g., static) environment, since routing path(s) is determined before the TSN network is in operation. Thus, it is unknown how to determine routing path(s) for stream(s) at runtime (e.g., there are other stream(s) currently being transmitted in the TSN network).

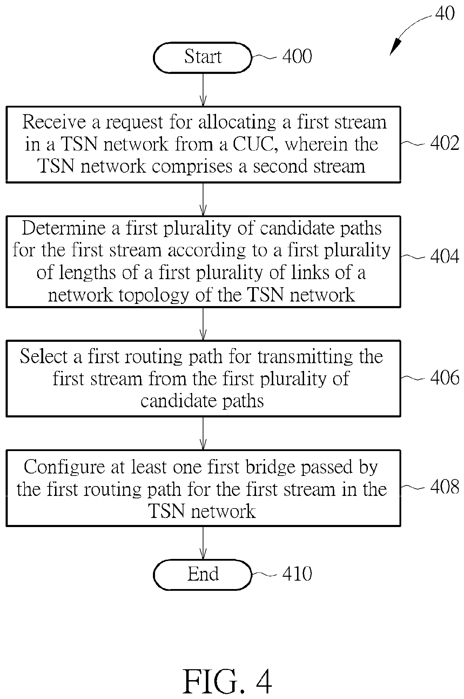

Fig. 4 is a flowchart of a process 40 according to an example of the present invention. The process 40 may be utilized in a CNC (e.g., the CNC120), to handle routing paths for streams in a TSN network. The process 40 may be compiled into program codes and includes the following steps:

Step 400: Start.
Step 402: Receive a request for allocating a first stream in a TSN network from a CUC, wherein the TSN network comprises a second stream.
Step 404: Determine a first plurality of candidate paths for the first stream according to a first plurality of lengths of a first plurality of links of a network topology of the TSN network.
Step 406: Select a first routing path for transmitting the first stream from the first plurality of candidate paths.
Step 408: Configure at least one first bridge passed by the first routing path for the first stream in the TSN network.
Step 410: End.

According to the process 40, the CNC receives a request for allocating a first stream (e.g., new/input stream) in a TSN network from a CUC, wherein the TSN network comprises a second stream (e.g., existing/background stream which is currently being transmitted). The CNC determines (e.g., generates) a first plurality of candidate paths for the first stream according to a first plurality of lengths of a first plurality of links of a network topology of the TSN network. The CNC selects a first routing path for transmitting the first stream from the first plurality of candidate paths. Then, the CNC configures at least one first bridge passed by the first routing path for the first stream in the TSN network. That is, the CNC determines the first plurality of candidate paths, and then selects the routing path for transmitting the first stream from the first plurality of candidate paths. In other words, a two-step method is used for determining the routing path for transmitting the first stream. Thus, the problem regarding determining routing path(s) for stream(s) at runtime is solved.

Realization of the process 40 is not limited to the above description. The following examples may be applied for realizing the process 40.

In one example, the first plurality of candidate paths are comprised in a first plurality of paths for the first stream. In one example, the first plurality of paths are all of paths from a source node of the first stream to a destination node of the first stream.

In one example, the first plurality of candidate paths comprise (e.g., are) a plurality of shortest paths for the first stream. In one example, the CNC determines the first plurality of candidate paths according to a shortest path first (SPF) algorithm. In one example, the SPF algorithm is a Yen's algorithm.

In one example, the step of configuring the at least one first bridge comprises configuring (e.g., controlling) a plurality of priority queues of the at least one first bridge (e.g., GCL assignment). In one example, the CNC selects the first routing path from the first plurality of candidate paths according to a plurality of bandwidth capacities associated with the first plurality of candidate paths. In one example, the first plurality of candidate paths are formed by a plurality of links, and the plurality of links correspond to the plurality of bandwidth capacities, respectively.

In one example, the CNC determines a time schedule for transmitting the first stream, after selecting the first routing path for transmitting the first stream. In one example, the CNC transmits an accept message in response to the request to the CUC, if (e.g., after) the CNC determines the time schedule successfully. In one example, the accept message indicates that the first stream is scheduled successfully. In one example, the CNC configures the at least one first bridge according to the time schedule, if (e.g., after) the CNC determines the time schedule successfully.

In one example, the CNC transmits a reject message in response to the request to the CUC, if (e.g., after) the CNC does not determine the time schedule successfully. In one example, the reject message indicates that the first stream is not scheduled successfully. In one example, the CNC selects a third routing path for transmitting the first stream from the first plurality of candidate paths, if (e.g., after) the CNC does not determine the time schedule successfully.

In one example, the CNC selects a current routing path for transmitting the second stream from a second plurality of candidate paths for the second stream, before receiving the request. In one example, the second plurality of candidate paths are comprised in a second plurality of paths for the second stream. In one example, the second plurality of paths are all of paths from a source node of the second stream to a destination node of the second stream. In one example, the second plurality of candidate paths comprise (e.g., are) a plurality of shortest paths for the second stream. In one example, the CNC determines the second plurality of candidate paths according to a SPF algorithm. In one example, the SPF algorithm is a Yen's algorithm.

In one example, after receiving the request, the CNC selects (e.g., reselects) a second routing path for transmitting the second stream from the second plurality of candidate paths, and configures at least one second bridge passed by the second routing path for the second stream in the TSN network. In one example, the CNC selects the second routing path in response to the request. Note that the second routing path and the current routing path may be the same or different.

In one example, the first stream is with a first traffic type supported by the TSN network. That is, the first stream is a TSN stream, an AVB stream or a BE stream. In one example, the second stream is with a second traffic type supported by the TSN network. Note that the first traffic type and the second traffic type may be the same or different.

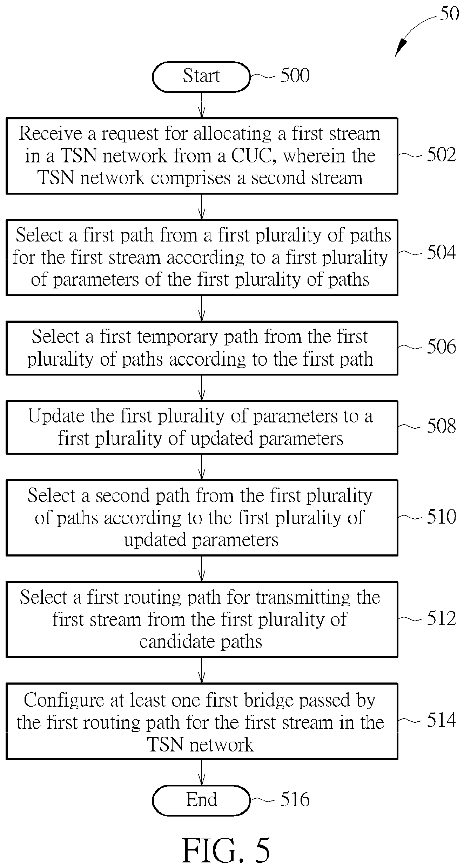

Fig. 5 is a flowchart of a process 50 according to an example of the present invention. The process 50 may be utilized in a CNC (e.g., CNC 120), to handle routing paths for streams in a TSN network. The process 50 may be compiled into program codes and includes the following steps:

Step 500: Start.
Step 502: Receive a request for allocating a first stream in a TSN network from a CUC, wherein the TSN network comprises a second stream.
Step 504: Select a first path from a first plurality of paths for the first stream according to a first plurality of parameters of the first plurality of paths.
Step 506: Select a first temporary path from the first plurality of paths according to the first path.
Step 508: Update the first plurality of parameters to a first plurality of updated parameters.
Step 510: Select a second path from the first plurality of paths according to the first plurality of updated parameters.
Step 512: Select a first routing path for transmitting the first stream from the second path and the first temporary path.

Step 514: Configure at least one first bridge passed by the first routing path for the first stream in the TSN network.
Step 516: End.

According to the process 50, the CNC receives a request for allocating a first stream (e.g., new/input stream) in a TSN network from a CUC, wherein the TSN network comprises a second stream (e.g., existing/background stream which is currently being transmitted). The CNC selects a first path from a first plurality of paths for the first stream according to a first plurality of parameters of (e.g., corresponding to) the first plurality of paths. The CNC selects a first temporary path from the first plurality of paths according to the first path. The CNC updates the first plurality of parameters to a first plurality of updated parameters. The CNC selects a second path from the first plurality of paths according to the first plurality of updated parameters. The CNC selects a first routing path for transmitting the first stream from the second path and the first temporary path. Then, the CNC configures at least one first bridge passed by the first routing path for the first stream in the TSN network. That is, the routing path for transmitting the first stream is selected from the plurality of paths according to the plurality of updated parameters of the plurality of paths. Thus, the problem regarding determining routing path(s) for stream(s) at runtime is solved.

Realization of the process 50 is not limited to the above description. The following examples may be applied for realizing the process 50.

In one example, the CNC initializes the first plurality of parameters to a plurality of default values, before selecting the first path. In one example, the CNC updates the first plurality of parameters to the first plurality of updated parameters according to the first path. In one example, the step of updating the first plurality of parameters according to the first path comprises determining a multiplication by multiplying a predetermined value with a first parameter of the first path, determining an incremental parameter of the first path according to the first path and an objective (e.g., cost) function, and obtaining a first updated parameter of the first path by adding the incremental parameter to the multiplication. In one example, the predetermined value is an evaporation coefficient for an ant colony optimization (ACO) algorithm.

In one example, the CNC selects the first temporary path according to the first path and one of the first plurality of paths. In one example, the CNC selects the first temporary path from the first path and the one of the first plurality of paths. In one example, the one of the first plurality of paths is a shortest path for the first stream. In one example, the CNC initializes the one of the first plurality of paths to the shortest path.

In one example, the first plurality of parameters comprise (e.g., are) a plurality of pheromone values for an ACO algorithm. In one example, the CNC initializes the first plurality of parameters and a second plurality of parameters of the first plurality of paths, before selecting the first path. The CNC selects the first path according to the first plurality of parameters and the second plurality of parameters, and selects the second path according to the first plurality of updated parameters and the second plurality of parameters. In one example, the second plurality of parameters comprise (e.g., are) a plurality of visibility values for an ACO algorithm.

In one example, the CNC initializes the second plurality of parameters according to a first traffic type of the first stream. In one example, the CNC determines the second plurality of parameters according to a plurality of number of hop counts of the first plurality of paths, if the first stream is a TSN stream. In one example, the plurality of number of hop counts are inversely proportional to the second plurality of parameters. In one example, the CNC determines the second plurality of parameters according to a plurality of worst-case delays of the first plurality of paths, if the first stream is an AVB stream. In one example, the plurality of worst-case delays are inversely proportional to the second plurality of parameters.

In one example, the CNC selects the first path according to a first plurality of transition probabilities determined according to the first plurality of parameters and the second plurality of parameters, and selects the second path according to a second plurality of transition probabilities determined according to the first plurality of updated parameters and the second plurality of parameters. A transition probability of a recent path represents a transition from the recent path to a next path. Note that the recent path and the next path may be the same or different.

In one example, the step of selecting the first routing path from the second path and the first temporary path comprises selecting the second path as the first routing path, if a first value determined according to the second path and an objective function is smaller than a second value determined according to the first temporary path and the objective function. The step of selecting the first routing path from the second path and the first temporary path comprises selecting the first temporary path as the first routing path, if the first value is not smaller than the second value. In one example, the objective function comprises at least one objective. In one example, the at least one objective comprises minimizing a number of non-schedulable TSN stream(s), minimizing a number of non-schedulable AVB stream(s), minimizing a number of rerouted stream(s), and minimizing delay(s) of AVB stream(s). Note that a schedulability of a stream is determined according to a worst-case delay of the stream and a deadline of the stream. The stream is a schedulable stream, if the worst-case delay is not greater than the deadline. The stream is a non-schedulable stream, if the worst-case delay is greater than the deadline. Note that the worst-case delay depends on a timing model of the TSN network.

In one example, the first stream is with a first traffic type supported by the TSN network. That is, the first stream is a TSN stream, an AVB stream or a BE stream. In one example, the second stream is with a second traffic type supported by the TSN network. Note that the first traffic type and the second traffic type may be the same or different.

In one example, the CNC determines a time schedule for transmitting the first stream, after selecting the first routing path for transmitting the first stream. In one example, the CNC transmits an accept message in response to the request to the CUC, if (e.g., after) the CNC determines the time schedule successfully. In one example, the accept message indicates that the first stream is scheduled successfully. In one example, the CNC configures the at least one first bridge according to the time schedule, if (e.g., after) the CNC determines the time schedule successfully.

In one example, the CNC transmits a reject message in response to the request to the CUC, if (e.g., after) the CNC does not determine the time schedule successfully. In one example, the reject message indicates that the first stream is not scheduled successfully. In one example, the CNC selects a third routing path for transmitting the first stream from the first plurality of candidate paths, if (e.g., after) the CNC does not determine the time schedule successfully.

In one example, the CNC selects a current routing path for transmitting the second stream from a second plurality of paths for the second stream, before receiving the request. That is, the second stream is currently transmitted via the current routing path in the TSN network. In one example, after receiving the request, the CNC selects (e.g., reselect) a third path from the second plurality of paths according to a third plurality of parameters of the second plurality of paths, selects a second temporary path from the second plurality of paths according to the third path, and updates the third plurality of parameters to a third plurality of updated parameters. Then, the CNC selects a fourth path from the second plurality of paths according to the third plurality of updated parameters, selects a second routing path for transmitting the second stream from the fourth path and the second temporary path, and configures at least one second bridge passed by the second routing path for the second stream in the TSN network. In one example, the second routing path and the current routing path may be the same or different. In one example, the CNC selects the third path in response to the request.

In one example, there are a plurality of prior parameters of the second plurality of paths, before receiving the request. In one example, the CNC initializes the third plurality of parameters to the plurality of prior parameters, before selecting the third path. In one example, the CNC updates the third plurality of parameters to the third plurality of updated parameters according to the third path. In one example, the CNC updates the first plurality of parameters and the third plurality of parameters, after selecting the first path and the third path. In one example, the CNC selects the second path and the fourth path, after updating the first plurality of parameters and the third plurality of parameters.

In one example, the CNC selects the second temporary path according to the third path and one of the second plurality of paths. In one example, the CNC selects the second temporary path from the third path and the one of the second plurality of paths. In one example, the one of the second plurality of paths is the current routing path. In one example, the CNC initializes the one of the second plurality of paths to the current routing path.

In one example, the third plurality of parameters comprise (e.g., are) a plurality of pheromone values for an ACO algorithm. In one example, the CNC initializes the third plurality of parameters and a fourth plurality of parameters of the second plurality of paths, before selecting the third path. The CNC selects the third path according to the third plurality of parameters and the fourth plurality of parameters, and selects the fourth path according to the third plurality of updated parameters and the fourth plurality of parameters. In one example, the CNC selects the third path according to a third plurality of transition probabilities determined according to the third plurality of parameters and the fourth plurality of parameters, and selects the fourth path according to a fourth plurality of transition probabilities determined according to the third plurality of updated parameters and the fourth plurality of parameters. In one example, the fourth plurality of parameters comprise (e.g., are) a plurality of visibility values for an ACO algorithm.

In one example, the CNC initializes the fourth plurality of parameters according to a second traffic type of the second stream. In one example, the CNC determines the fourth plurality of parameters according to a plurality of number of hop counts of the second plurality of paths, if the second stream is a TSN stream. In one example, the plurality of number of hop counts are inversely proportional to the fourth plurality of parameters. In one example, the CNC determines the fourth plurality of parameters according to a plurality of worst-case delays of the second plurality of paths, if the second stream is an AVB stream. In one example, the plurality of worst-case delays are inversely proportional to the fourth plurality of parameters.

In one example, the CNC initializes the fourth plurality of parameters according to a plurality of multiplication values of the second plurality of paths. Note that a probability of selecting a path may depend on a multiplication value of the path. In one example, the plurality of multiplication values are proportional to the fourth plurality of parameters. In one example, a multiplication value of the current routing path is greater than rest of the plurality of multiplication values of rest of the second plurality of paths. That is, the CNC prefers the current routing path to the rerouting paths, e.g., to avoid a rerouting overhead (e.g., GCL re-assignment).

In one example, the step of selecting the second routing path from the fourth path and the second temporary path comprise selecting the fourth path as the second routing path, if a third value determined according to the fourth path and an objective (e.g., cost) function is smaller than a fourth value determined according to the second temporary path and the objective function. The step of selecting the second routing path from the fourth path and the second temporary path comprise selecting the second temporary path as the second routing path, if the third value is not smaller than the fourth value. In one example, the CNC selects the first routing path and the second routing path, after selecting the second path and the fourth path.

According to the above description, an example of a pseudo code for determining routing paths for new streams and current streams can be obtained as follows. Note that there are current routing paths for the current streams, candidate paths for the current streams, and prior pheromone values of the candidate paths.

for $(k = 1: |S \cup S'|)$

    if $(\lambda_k \in S)$

        Determine $\mathrm{CandRP}[\lambda_k][z]$ according to $\mathrm{YensAlgo}(G, S, Z)$.

        Initialize $\mathrm{Phero}[\lambda_k][z]$ to $1$, $\forall\, 1 \leq z \leq Z$.

        Initialize $\pi_k$ to $\mathrm{SP}(\lambda_k)$.

    if $(\lambda_k \in S')$

        Determine $\mathrm{CandRP}'[\lambda_k][z]$ as $\mathrm{CandRP}[\lambda_k][z]$.

        Initialize $\mathrm{Phero}[\lambda_k][z]$ to $\mathrm{Phero}'[\lambda_k][z]$, $\forall\, 1 \leq z \leq Z$.

        Initialize $\pi_k$ to $\overline{\pi}'_k$.

end for

for $(k = 1: |S \cup S'|)$

    for $(z = 1: Z)$

        Determine $1$ as mult.

        if $((\lambda_k \in S')$ and $(\mathrm{CandRP}[\lambda_k][[z] = \overline{\pi}'_k))$

            Determine Preference as mult.

        end if

        if $(\lambda_k \in S_{\mathrm{TSN}} \cup S'_{\mathrm{TSN}})$

            Determine $\dfrac{\text{mult}}{\mathrm{HOP}(\mathrm{CandRP}[\lambda_k][[z])}$ as $\mathrm{VB}[\lambda_k][z]$.

        else

            Determine $\dfrac{\text{mult}}{\mathrm{WCD}(G,S,S',\Pi\,,\mathrm{CandRP}[\lambda_k][[z])}$ as $\mathrm{VB}[\lambda_k][z]$.

        end if

    end for

end for

while $(t \leq T)$ do

for (k = 1: |S ∪ S'|)

Determine $\frac{\mathrm{VB}[\lambda_k][z] \times \mathrm{Phero}[\lambda_k][z]}{\sum_{z=1}^{Z} \mathrm{VB}[\lambda_k][z] \times \mathrm{Phero}[\lambda_k][z]}$ as Prob(CandRP$[\lambda_k][[z])$, $\forall\, 1 \leq z \leq Z$.

Select $\widehat{\pi}_k$ from CandRP$[\lambda_k][[z]$ according to Prob(CandRP$[\lambda_k][[z])$.

end for

for (k = 1: |S ∪ S'|)

    for (z = 1: Z)

        Update $\rho \times \mathrm{Phero}[\lambda_k][z]$ to $\mathrm{Phero}[\lambda_k][z]$.

        if $(z \in \widehat{\Pi})$

           Update $\mathrm{Phero}[\lambda_k][z] + \dfrac{1}{\mathrm{Cost}(G,S,S',\widehat{\Pi})}$ to $\mathrm{Phero}[\lambda_k][z]$.

    end for

end for

if $(\mathrm{Cost}(G, S, S', \widehat{\Pi}) < \mathrm{Cost}(G, S, S', \Pi))$

    Determine $\widehat{\Pi}$ as $\Pi$.

end while

Output $\Pi$.

In detail, G represents a graph of a network topology of the TSN network, S represents all of the new streams, S' represents all of the current streams, and |S ∪ S'| represents a number of all of the new streams and the current streams. $\lambda_k$ represents a kth stream, SP($\lambda_k$) represents a shortest path for the kth stream, Z represents a number of candidate paths for the kth stream, and CandRP $[\lambda_k][z]$ represents a zth candidate path for the kth stream. $S_{TSN}$ and $S'_{TSN}$ represent all of TSN stream(s) comprised in the new streams and all of TSN stream(s) comprised in the current streams, respectively. Note that a new stream may be a TSN stream or an AVB stream, and a current stream may be a TSN stream or an AVB stream.

$\pi_k$ represents a routing path for the kth stream, and Π represents all of routing paths for the all of the streams. $\widehat{\pi}_k$ represents a temporary path for the kth stream, and $\widehat{\Pi}$ represents all of temporary paths for the all of the streams. $\overline{\pi}'_k$ represents a current routing path, and Π' represents all of the current routing paths. CandRP' $[\lambda_k][z]$ represents a zth candidate path. t represents a computing time, and T represents a maximum time (e.g., 10ms). YensAlgo(·) represents a Yen's algorithm.

In addition, Phero$[\lambda_k][z]$ and VB$[\lambda_k][z]$ represent a pheromone value and a visibility value for the zth candidate path for the kth stream, respectively. Phero' $[\lambda_k][z]$ represents a prior pheromone value of the zth candidate path. $\rho$ represents an evaporation coefficient provided by an operator or an user. "mult" represents a multiplication value. "Preference" represents a preference value provided by the operator or the user. Prob(CandRP$[\lambda_k][[z])$, ! HOP(CandRP$[\lambda_k][[z])$ and WCD(G, S, S', Π',CandRP$[\lambda_k][[z])$ represent a transition probability, a number of hop counts and a worst-case delay of the zth candidate path for the kth stream, respectively. Cost(-) represents an objective function, and is expressed as the following equation:

$$\text{Cost}(\cdot) = W_1 O_1 + W_2 O_2 + W_3 O_3 + W_4 O_4,$$

$$(\text{Eq.1})$$

where $O_1$, $O_2$, $O_3$, and $O_4$ represent an objective for minimizing a number of non-schedulable TSN stream(s), an objective for minimizing a number of non-schedulable AVB stream(s), an objective for minimizing a number of rerouted stream(s), and an objective for minimizing delay(s) of AVB stream(s), respectively. $W_1$, $W_2$, $W_3$, and $W_4$ represent weight values corresponding to $O_1$, $O_2$, $O_3$, and $O_4$, and are defined according to the following equations:

$$W_1 > |S_{AVB} \cup S'_{AVB}| \times W_2,$$

$$(\text{Eq.2})$$

$$W_2 > |S'| \times W_3,$$

$$(\text{Eq.3})$$

$$W_3 > \left( \sum\nolimits_{\lambda_k \in S_{AVB}} D_k + \sum\nolimits_{\lambda_k \in S'_{AVB}} D_k \right) \times W_4,$$

$$(\text{Eq.4})$$

and

$$W_4 = 1,$$

$$(\text{Eq.5})$$

where $S_{AVB}$ ( $S'_{AVB}$ ) represents all of AVB stream(s) comprised in the new streams (the current streams), and $D_k$ represents a deadline of $\lambda_k$.

According to the above description, an example of handling routing paths for streams in a TSN network is stated as follows. A TSN topology of the TSN network is the same as the TSN topology in Fig. 3. A CNC receive a request for allocating new streams $\lambda_1$-$\lambda_2$ in the TSN network, wherein the TSN network comprises current streams $\lambda_3$-$\lambda_4$ (e.g., currently being transmitted via paths {ED1, BR1, BR4, ED6} and {ED1, BR1, BR2, BR4, ED6}, respectively). In the present example, the new stream $\lambda_1$ is an AVB stream, and the new stream $\lambda_2$ is a TSN stream. Source nodes of the streams $\lambda_1$-$\lambda_4$ are the end device ED1-ED4, respectively. Destination nodes of the streams $\lambda_1$-$\lambda_4$ are the end device ED6-ED9, respectively.

According to the above description, the CNC determines two paths {ED1, BR1, BR2, BR4, ED6} and {ED1, BR1, BR4, ED6} for the new stream $\lambda_1$ as candidate paths for the new stream $\lambda_1$. The CNC determines two paths {ED1, BR1, BR3, BR4, ED6} and {ED1, BR1, BR4, ED6} for the new stream $\lambda_2$ as candidate paths for the new stream $\lambda_2$. Note that numbers of the candidate paths for the streams are the same, but are not limited herein.

According to the above description, there are pheromone values of the paths {ED1, BR1, BR2, BR4, ED6} and {ED1, BR1, BR4, ED6}. In the present example, a transition probability determined according to the pheromone values of the path {ED1, BR1, BR4, ED6} is higher than that of the path {ED1, BR1, BR2, BR4, ED6}, and the CNC selects {ED1, BR1, BR4, ED6} as a temporary path for the new stream $\lambda_1$. Similarly, there are pheromone values of the paths {ED1, BR1, BR3, BR4, ED6} and {ED1, BR1, BR4, ED6}. In the present example, a transition probability determined according to the pheromone values of the path {ED1, BR1, BR4, ED6} is higher than that of the path {ED1, BR1, BR3, BR4, ED6}, and the CNC selects {ED1, BR1, BR4, ED6} as a temporary path for the new stream $\lambda_2$. Then, the CNC updates the pheromone values to updated pheromone values.

In the present example, a transition probability determined according to the updated pheromone values of the path {ED1, BR1, BR2, BR4, ED6} is higher than that of the path {ED1, BR1, BR4, ED6}, and the CNC selects the path {ED1, BR1, BR2, BR4, ED6}. A value determined according to the path {ED1, BR1, BR2, BR4, ED6} is smaller than that of the temporal path, and the CNC selects the path {ED1, BR1, BR2, BR4, ED6} as a routing path $\pi_1$ for transmitting the new stream $\lambda_1$.

In addition, a transition probability determined according to the updated pheromone values of the path {ED1, BR1, BR3, BR4, ED6} is higher than that of the path {ED1, BR1, BR4, ED6}, and the CNC selects the path {ED1, BR1, BR3, BR4, ED6}. A value determined according to the path {ED1, BR1, BR3, BR4, ED6} is smaller than that of the temporal path, and the CNC selects the path {ED1, BR1, BR3, BR4, ED6} as a routing path $\pi_2$ for transmitting the new stream $\lambda_2$.

Then, the CNC configures the bridges BR1, BR2, and BR4 for the new stream $\lambda_1$, and configures the bridges BR1, BR3, and BR4 for the new stream $\lambda_2$. That is, the CNC determines the routing paths for transmitting the new streams $\lambda_1$-$\lambda_2$, when the current streams $\lambda_3$-$\lambda_4$ are currently transmitted in the TSN network. In other words, the routing paths for the new streams $\lambda_1$-$\lambda_2$ are determined at runtime.

The operation of "determine" described above may be replaced by the operation of "compute", "calculate", "obtain", "generate", "output, "use", "choose/select" or "decide". The term of "according to" described above may be replaced by "in response to". The phrase of "associated with" described above may be replaced by "of" or "corresponding to". The term of "via" described above may be replaced by "on", "in" or "at". The term "at least one of ... or ..." described above may be replaced by "at least one of ... or at least one of ..." or "at least one selected from the group of ... and ...".

Those skilled in the art should readily make combinations, modifications and/or alterations on the abovementioned description and examples. The abovementioned description, steps and/or processes including suggested steps can be realized by means that could be hardware, software, firmware (known as a combination of a hardware device and computer instructions and data that reside as read-only software on the hardware device), an electronic system, or combination thereof. An example of the means may be the CNC 20.

Examples of the hardware may include analog circuit(s), digital circuit(s) and/or mixed circuit(s). For example, the hardware may include ASIC(s), field programmable gate array(s) (FPGA(s)), programmable logic device(s), coupled hardware components or combination thereof. In another example, the hardware may include general-purpose processor(s), microprocessor(s), controller(s), digital signal processor(s) (DSP(s)) or combination thereof.

Examples of the software may include set(s) of codes, set(s) of instructions and/or set(s) of functions retained (e.g., stored) in a storage unit, e.g., a computer-readable medium. The computer-readable medium may include SIM, ROM, flash memory, RAM, CD-ROM/DVD-ROM/BD-ROM, magnetic tape, hard disk, optical data storage device, non-volatile storage unit, or combination thereof. The computer-readable medium (e.g., storage device) may be coupled to at least one processor internally (e.g., integrated) or externally (e.g., separated). The at least one processor which may include one or more modules may (e.g., be configured to) execute the software in the computer-readable medium. The set(s) of codes, the set(s) of instructions and/or the set(s) of functions may cause the at least one processor, the module(s), the hardware and/or the electronic system to perform the related steps.

Examples of the electronic system may include a system on chip (SoC), system in package (SiP), a computer on module (CoM), a computer program product, an apparatus, a mobile phone, a laptop, a tablet computer, an electronic book or a portable computer system, and the CNC 20.

To sum up, the present invention provides a device for handling routing paths for streams in a TSN network. A two-step method is used for determining a routing path for transmitting a stream. Thus, the problem regarding determining routing path(s) for stream(s) at runtime is solved.

**Claims**

1. A central network controller, CNC, (20) for handling routing paths for streams in a time-sensitive networking, TSN, network, the CNC comprising

   at least one storage device (210); and
   at least one processing circuit (200), coupled to the at least one storage device, wherein the at least one storage device stores instructions, and the at least one processing circuit is configured to execute the instructions of:

   receiving a request for allocating a first stream in a TSN network from a centralized user configuration, CUC, wherein the TSN network comprises a second stream (402);
   determining a first plurality of candidate paths for the first stream according to a first plurality of lengths of a first plurality of links of a network topology of the TSN network (404);
   selecting a first routing path for transmitting the first stream from the first plurality of candidate paths (406); and
   configuring at least one first bridge passed by the first routing path for the first stream in the TSN network (408).

**2.** The CNC of claim 1, wherein the first plurality of candidate paths comprise a plurality of shortest paths for the first stream.

**3.** The CNC of claim 1 or 2, wherein the CNC is further configured to determine the first plurality of candidate paths according to a shortest path first, SPF, algorithm.

**4.** The CNC of any of claims 1-3, wherein the instructions further comprise:
selecting a current routing path for transmitting the second stream from a second plurality of candidate paths for the second stream, before receiving the request.

**5.** The CNC of claim 4, wherein the instructions further comprise:

selecting a second routing path for transmitting the second stream from the second plurality of candidate paths, after receiving the request; and
configuring at least one second bridge passed by the second routing path for the second stream in the TSN network.

**6.** The CNC of any of claims 1-5, wherein the first stream is with a first traffic type supported by the TSN network.

**7.** A central network controller, CNC, (20) for handling routing paths for streams in a

time-sensitive networking, TSN, network, the CNC comprising at least one storage device (210); and
at least one processing circuit (200), coupled to the at least one storage device, wherein the at least one storage device stores instructions, and the at least one processing circuit is configured to execute the instructions of:

receiving a request for allocating a first stream in a TSN network from a centralized user configuration, CUC, wherein the TSN network comprises a second stream (502);
selecting a first path from a first plurality of paths for the first stream according to a first plurality of parameters of the first plurality of paths (504);
selecting a first temporary path from the first plurality of paths according to the first path; updating the first plurality of parameters to a first plurality of updated parameters (506); selecting a second path from the first plurality of paths according to the first plurality of updated parameters (508);
selecting a first routing path for transmitting the first stream from the second path and the first temporary path (510); and
configuring at least one first bridge passed by the first routing path for the first stream in the TSN network (512).

**8.** The CNC of claim 7, wherein the CNC is further configured to update the first plurality of parameters to the first plurality of updated parameters according to the first path.

**9.** The CNC of claim 7 or 8, wherein the CNC is further configured to select the first temporary path according to the first path and one of the first plurality of paths.

**10.** The CNC of claim 9, wherein the one of the first plurality of paths is a shortest path for the first stream.

**11.** The CNC of any of claims 7-10, wherein the first plurality of parameters comprise a plurality of pheromone values for an ant colony optimization, ACO, algorithm.

**12.** The CNC of any of claims 7-11, wherein the instructions further comprise:

initializing the first plurality of parameters and a second plurality of parameters of the first plurality of paths, before selecting the first path;
selecting the first path according to the first plurality of parameters and the second plurality of parameters; and
selecting the second path according to the first plurality of updated parameters and the second plurality of parameters.

**13.** The CNC of claim 12, wherein the second plurality of parameters comprise a plurality of visibility values for an ACO algorithm.

14. The CNC of any of claims 7-13, wherein the instruction of selecting the first routing path from the second path and the first temporary path comprises:

selecting the second path as the first routing path, if a first value determined according to the second path and an objective function is smaller than a second value determined according to the first temporary path and the objective function; and
selecting the first temporary path as the first routing path, if the first value is not smaller than the second value.

15. The CNC of any of claims 7-14, wherein the first stream is with a first traffic type supported by the TSN network.

**Patentansprüche**

1. Zentrale Netzwerksteuerung, CNC, (20) zur Handhabung von Routingpfaden für Datenströme in einem zeitempfindlichen Netzwerk, TSN, wobei die CNC umfasst:

mindestens eine Speichervorrichtung (210); und
mindestens eine Verarbeitungsschaltung (200), die mit der mindestens einen Speichervorrichtung gekoppelt ist, wobei die mindestens eine Speichervorrichtung Anweisungen speichert und die mindestens eine Verarbeitungsschaltung so konfiguriert ist, dass sie die Anweisungen ausführt:

Empfangen einer Anforderung zur Zuweisung eines ersten Datenstroms in einem TSN-Netzwerk von einer zentralisierten Benutzerkonfiguration, CUC, wobei das TSN-Netzwerk einen zweiten Datenstrom (402) umfasst;
Bestimmen mehrerer Kandidatenpfade für den ersten Datenstrom gemäß mehrerer erster Längen mehrerer erster Verbindungen einer Netzwerktopologie des TSN-Netzes (404);
Auswählen eines ersten Routingpfades zum Übertragen des ersten Datenstroms von den mehreren ersten Kandidatenpfaden (406); und
Konfigurieren mindestens einer ersten Brücke, die von dem ersten Routingpfad für den ersten Datenstrom in dem TSN-Netzwerk passiert wird (408).

2. CNC nach Anspruch 1, wobei die mehreren ersten Kandidatenpfade mehrerer kürzeste Pfade für den ersten Datenstrom umfassen.

3. CNC nach Anspruch 1 oder 2, wobei die CNC ferner so konfiguriert ist, dass sie die mehreren ersten Kandidatenpfade gemäß einem SPF-Algorithmus (*shortestpath first*) bestimmt.

4. CNC nach einem der Ansprüche 1 bis 3, wobei die Anweisungen ferner umfassen:
Auswählen eines aktuellen Routingpfades zur Übertragung des zweiten Datenstroms von mehreren zweiten Kandidatenpfaden für den zweiten Datenstrom, bevor die Anforderung empfangen wird.

5. CNC nach Anspruch 4, wobei die Anweisungen ferner umfassen:

Auswählen eines zweiten Routingpfades zum Übertragen des zweiten Datenstroms aus den mehreren zweiten Kandidatenpfaden, nachdem die Anforderung empfangen wurde; und
Konfigurieren mindestens einer zweiten Brücke, die von dem zweiten Routingpfad für den zweiten Datenstrom im TSN-Netzwerk passiert wird.

6. CNC nach einem der Ansprüche 1 bis 5, wobei der erste Datenstrom einen ersten Verkehrstyp aufweist, der vom TSN-Netzwerk unterstützt wird.

7. Zentrale Netzwerksteuerung, CNC, (20) zur Handhabung von Routingpfaden für Datenströme in einem zeitempfindlichen Netzwerk, TSN, wobei die CNC umfasst:

mindestens eine Speichervorrichtung (210); und
mindestens eine Verarbeitungsschaltung (200), die mit der mindestens einen Speichervorrichtung gekoppelt ist, wobei die mindestens eine Speichervorrichtung Anweisungen speichert und die mindestens eine Verarbeitungsschaltung so konfiguriert ist, dass sie die Anweisungen ausführt:

Empfangen einer Anforderung zur Zuweisung eines ersten Datenstroms in einem TSN-Netzwerk von einer zentralisierten Benutzerkonfiguration, CUC, wobei das TSN-Netzwerk einen zweiten Datenstrom (502) umfasst;

Auswählen eines ersten Pfades aus mehreren ersten Pfaden für den ersten Datenstrom gemäß mehrerer erster Parameter der mehreren ersten Pfade (504);

Auswählen eines ersten temporären Pfades aus den mehreren ersten Pfaden gemäß dem ersten Pfad;

Aktualisieren der mehreren ersten Parameter zu mehreren ersten aktualisierten Parametern (506);

Auswählen eines zweiten Pfades aus den mehreren ersten Pfaden entsprechend den mehreren ersten aktualisierten Parametern (508);

Auswählen eines ersten Routingpfades zum Übertragen des ersten Datenstroms aus dem zweiten Pfad und dem ersten temporären Pfad (510); und

Konfigurieren mindestens einer ersten Brücke, die von dem ersten Routingpfad für den ersten Datenstrom in dem TSN-Netzwerk passiert wird (512).

**8.** CNC nach Anspruch 7, wobei die CNC ferner so konfiguriert ist, die mehreren ersten Parameter auf die mehreren ersten aktualisierten Parameter gemäß dem ersten Pfad zu aktualisieren.

**9.** CNC nach Anspruch 7 oder 8, wobei die CNC ferner so konfiguriert ist, dass sie den ersten temporären Weg entsprechend dem ersten Weg und einem der mehreren ersten Wege auswählt.

**10.** CNC nach Anspruch 9, wobei der eine aus den mehreren ersten Pfaden ein kürzester Pfad für den ersten Datenstrom ist.

**11.** CNC nach einem der Ansprüche 7-10, wobei die mehreren ersten Parameter mehrere Pheromonwerte für einen Ameisenkolonie-Optimierungsalgorithmus (ACO) umfasst.

**12.** CNC nach einem der Ansprüche 7 bis 11, wobei die Anweisungen ferner umfassen:

Initialisieren der mehreren ersten Parameter und mehrerer zweiter Parameter der mehreren ersten Pfade, bevor der erste Pfad ausgewählt wird;

Auswählen des ersten Pfades gemäß den mehreren ersten Parametern und den mehreren zweiten Parametern; und

Auswählen des zweiten Pfades gemäß den mehreren ersten aktualisierten Parametern und der mehreren zweiten Parametern.

**13.** CNC nach Anspruch 12, wobei die mehreren zweiten Parameter mehrere Sichtbarkeitswerte für einen ACO-Algorithmus umfassen.

**14.** CNC nach einem der Ansprüche 7 bis 13, wobei die Anweisung zur Auswahl des ersten Routingpfad aus dem zweiten Weg und dem ersten temporären Weg umfasst:

Auswählen des zweiten Pfades als den ersten Routingpfad, wenn ein erster Wert, der gemäß dem zweiten Pfad und einer Zielfunktion bestimmt wurde, kleiner ist als ein zweiter Wert, der gemäß dem ersten temporären Pfad und der Zielfunktion bestimmt wurde; und

Auswählen des ersten temporären Pfades als den ersten Routingpfad, wenn der erste Wert nicht kleiner als der zweite Wert ist.

**15.** CNC nach einem der Ansprüche 7-14, wobei der erste Datenstrom einen ersten Verkehrstyp aufweist, der vom TSN-Netzwerk unterstützt wird.

**Revendications**

**1.** Contrôleur de réseau central, CNC, (20) pour gérer les chemins d'acheminement pour les flux dans un réseau de mise en réseau sensible au temps, TSN, le CNC comprenant:

au moins un dispositif de stockage (210); et
au moins un circuit de traitement (200), couplé à l'au moins un dispositif de stockage, dans lequel l'au moins un dispositif de stockage stocke des instructions, et l'au moins un circuit de traitement est configuré pour exécuter les instructions de:

recevoir une demande d'allocation d'un premier flux dans un réseau TSN à partir d'une configuration d'utilisateur centralisée, CUC, dans laquelle le réseau TSN comprend un deuxième flux (402);
déterminer une première pluralité de chemins candidats pour le premier flux en fonction d'une première pluralité de longueurs d'une première pluralité de liens d'une topologie de réseau du réseau TSN (404);
sélectionner un premier chemin d'acheminement pour transmettre le premier flux parmi la première pluralité de chemins candidats (406); et
configurer au moins un premier pont passant par le premier chemin d'acheminement pour le premier flux dans le réseau TSN (408).

2. CNC de la revendication 1, dans laquelle la première pluralité de chemins candidats comprend une pluralité de chemins les plus courts pour le premier flux.

3. CNC de la revendication 1 ou 2, dans laquelle la CNC est en outre configurée pour déterminer la première pluralité de chemins candidats selon un algorithme du chemin le plus court, SPF.

4. CNC de l'une des revendications 1 à 3, dans laquelle les instructions consistent en outre à:
sélectionner un chemin d'acheminement courant pour la transmission du second flux parmi une seconde pluralité de chemins candidats pour le second flux, avant la réception de la demande.

5. CNC de la revendication 4, dans laquelle les instructions comprennent en outre:

sélectionner un second chemin d'acheminement pour la transmission du second flux parmi la seconde pluralité de chemins candidats, après réception de la demande; et
configurer au moins un deuxième pont passant par le deuxième chemin d'acheminement pour le deuxième flux dans le réseau TSN.

6. CNC de l'une des revendications 1 à 5, dans laquelle le premier flux est avec un premier type de trafic pris en charge par le réseau TSN.

7. Contrôleur de réseau central (CNC) (20) pour gérer les chemins d'acheminement des flux dans un réseau de mise en réseau sensible au temps (TSN), le CNC comprenant:

au moins un dispositif de stockage (210); et
au moins un circuit de traitement (200), couplé à l'au moins un dispositif de stockage, dans lequel l'au moins un dispositif de stockage stocke des instructions, et l'au moins un circuit de traitement est configuré pour exécuter les instructions de:

recevoir une demande d'allocation d'un premier flux dans un réseau TSN à partir d'une configuration d'utilisateur centralisée, CUC, dans laquelle le réseau TSN comprend un deuxième flux (502);
sélectionner un premier chemin parmi une première pluralité de chemins pour le premier flux en fonction d'une première pluralité de paramètres de la première pluralité de chemins (504);
sélectionner un premier chemin temporaire dans la première pluralité de chemins en fonction du premier chemin;
mettre à jour la première pluralité de paramètres en une première pluralité de paramètres mis à jour (506);
sélectionner un second chemin parmi la première pluralité de chemins en fonction de la première pluralité de paramètres mis à jour (508);
sélectionner un premier chemin d'acheminement pour transmettre le premier flux à partir du deuxième chemin et du premier chemin temporaire (510); et
configurer au moins un premier pont passant par le premier chemin d'acheminement pour le premier flux dans le réseau TSN (512).

8. CNC de la revendication 7, dans laquelle la CNC est en outre configurée pour mettre à jour la première pluralité de paramètres à la première pluralité de paramètres mis à jour en fonction du premier chemin.

9. CNC de la revendication 7 ou 8, dans laquelle la CNC est en outre configurée pour sélectionner le premier chemin temporaire en fonction du premier chemin et de l'une de la première pluralité de chemins.

10. CNC de la revendication 9, dans laquelle l'un de la première pluralité de chemins est un chemin le plus court pour le premier flux.

11. CNC de l'une des revendications 7 à 10, dans laquelle la première pluralité de paramètres comprend une pluralité de valeurs de phéromones pour un algorithme d'optimisation de colonies de fourmis (ACO).

12. CNC de l'une des revendications 7 à 11, dans laquelle les instructions comprennent en outre:

initialiser la première pluralité de paramètres et une deuxième pluralité de paramètres de la première pluralité de chemins, avant de sélectionner le premier chemin;
sélectionner le premier chemin en fonction de la première pluralité de paramètres et de la deuxième pluralité de paramètres; et
sélectionner le second chemin en fonction de la première pluralité de paramètres mis à jour et de la seconde pluralité de paramètres.

13. CNC de la revendication 12, dans laquelle la seconde pluralité de paramètres comprend une pluralité de valeurs de visibilité pour un algorithme ACO.

14. CNC de l'une des revendications 7 à 13, dans laquelle l'instruction de sélection du premier chemin d'acheminement à partir du second chemin et du premier chemin temporaire comprend:

sélectionner le second chemin comme premier chemin d'acheminement, si une première valeur déterminée en fonction du second chemin et d'une fonction objective est inférieure à une seconde valeur déterminée en fonction du premier chemin temporaire et de la fonction objective; et
sélectionner le premier chemin temporaire en tant que premier chemin d'acheminement si la première valeur n'est pas inférieure à la deuxième valeur.

15. CNC de l'une des revendications 7 à 14, dans laquelle le premier flux est d'un premier type de trafic pris en charge par le réseau TSN.

FIG. 1

214 —

Program codes

At least one
storage device

210

At least one
processing circuit

200

At least one
communication
interfacing device

220

20

FIG. 2

FIG. 3

~ 40

$\big(\,$ Start $\,\big)$ ~ 400

Receive a request for allocating a first stream in a TSN network from a CUC, wherein the TSN network comprises a second stream ~ 402

Determine a first plurality of candidate paths for the first stream according to a first plurality of lengths of a first plurality of links of a network topology of the TSN network ~ 404

Select a first routing path for transmitting the first stream from the first plurality of candidate paths ~ 406

Configure at least one first bridge passed by the first routing path for the first stream in the TSN network ~ 408

$\big(\,$ End $\,\big)$ ~ 410

# FIG. 4

```
                                                    ⌐50
                                              ⌐
                                             ⌐
                 ┌─────────────┐
                 │    Start    )──── 500
                 └─────────────┘
                        │
                        ▼
        ┌────────────────────────────────────┐
        │  Receive a request for allocating a first stream │
        │   in a TSN network from a CUC, wherein the       ├── 502
        │    TSN network comprises a second stream         │
        └────────────────────────────────────┘
                        │
                        ▼
        ┌────────────────────────────────────┐
        │  Select a first path from a first plurality of paths │
        │  for the first stream according to a first plurality ├── 504
        │     of parameters of the first plurality of paths    │
        └────────────────────────────────────┘
                        │
                        ▼
        ┌────────────────────────────────────┐
        │   Select a first temporary path from the first    │
        │    plurality of paths according to the first path ├── 506
        └────────────────────────────────────┘
                        │
                        ▼
        ┌────────────────────────────────────┐
        │    Update the first plurality of parameters to a   │
        │       first plurality of updated parameters        ├── 508
        └────────────────────────────────────┘
                        │
                        ▼
        ┌────────────────────────────────────┐
        │   Select a second path from the first plurality    │
        │    of paths according to the first plurality of    ├── 510
        │                updated parameters                  │
        └────────────────────────────────────┘
                        │
                        ▼
        ┌────────────────────────────────────┐
        │ Select a first routing path for transmitting the   │
        │     first stream from the first plurality of       ├── 512
        │                candidate paths                     │
        └────────────────────────────────────┘
                        │
                        ▼
        ┌────────────────────────────────────┐
        │  Configure at least one first bridge passed by     │
        │ the first routing path for the first stream in the ├── 514
        │                 TSN network                        │
        └────────────────────────────────────┘
                        │
                        ▼
                 ┌─────────────┐
                 │    End      )──── 516
                 └─────────────┘
```

# FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. ALNAJIM et al.** Incremental Path-Selection and Scheduling for Time-Sensitive Networks. *GLOBE-COM 2019*